Europäisches Patentamt

**European Patent Office**

**Office européen des brevets**

(11) Publication number: **0 220 811**
A1

# EUROPEAN PATENT APPLICATION

(21) Application number: **86306614.8**

(22) Date of filing: **27.08.86**

(51) Int. Cl.⁴: **C 22 B 11/04**

(30) Priority: **29.08.85 CA 489678**

(43) Date of publication of application: **06.05.87**
**Bulletin 87/19**

(84) Designated Contracting States: **DE FR GB**

(71) Applicant: **296388 B.C. Ltd., 320 - 510 West Hastings Street, Vancouver British Columbia V6B 1L8 (CS)**

(72) Inventor: **Hunchuk, Walter S., 970 Charland Avenue, Cogitlam British Columbia (CA)**

(74) Representative: **Coxon, Philip, Eric Potter & Clarkson 14 Oxford Street, Nottingham NG1 5BP (GB)**

(54) **Process and apparatus for removing precious metals from solutions.**

(57) A metal precipitation process for the recovery of precious metals from a solution and, more particularly, for the recovery of silver from a spent photographic solution. The process uses a recovery cell filled with magnesium particulate and the solution is introduced so as to flow through the particulate. Water may be used to keep the reaction and, hence, the production of hydrogen gas under control. The recovery cell is removeable after the magnesium particulate is exhausted.

## INTRODUCTION

This invention relates to an apparatus and process for removing precious metals from a solution and, more particularly, to an apparatus and process used for removing silver from a photographic solution.

## BACKGROUND OF THE INVENTION

The recovery of precious metals from a plating or photographic solution provides a significant technique for conserving precious metals such as silver, gold, platinum and paladium which would otherwise be lost. Such recovery also avoids the discharge of the unrecovered precious metals as well as other heavy metals in the solution to the environment which is undesirable because of the generally toxic nature of such solutions.

Previously, systems used for the recovery of precious metals from plating or photographic solutions have been disadvantageous for a variety of reasons. One reason for this inefficiency is that the systems have been costly to build and maintain because of the tendency for their filter systems to clog and the difficulty in removing and cleaning such filter systems. Another reason is that there is a tendency for a "channelling" effect in the filter system to occur. This channelling creates a generally free flowing liquid path through the filter system which creates a loss of precious metals which flow out with the solution because there is no reacting agent in the liquid path with which the solution will react.

## SUMMARY OF THE INVENTION

In accordance with one aspect of the invention, there is disclosed a method of precipitating precious metals from a solution containing such precious metals comprising the steps of introducing said solution into a container, subjecting said solution to the action of magnesium until said magnesium is substantially displaced by said precious metals and removing said precious metals from said container.

In accordance with a further aspect of the invention, there is disclosed a precious metal precipitation apparatus comprising a container, a precious metal solution introduction means in said container, first recovery cell means operable to hold said magnesium particulate and liquid outlet means in said container.

## BRIEF DESCRIPTION OF THE SEVERAL VIEWS OF THE DRAWINGS

An embodiment of the invention will now be described, by way of example only, with the use of drawings in which:

Figure 1 is a side view of the metal precipitation apparatus without the installed recovery cells;

Figure 2 is a view of a single recovery cell removed from the metal precipitation apparatus;

Figure 3 is a side view of the apparatus taken along III-III of Figure 1;

Figure 4 is a view taken along IV-IV of Figure 1; and

Figure 5 is a sectional view of the cell taken along V-V of Figure 4.

## DESCRIPTION OF SPECIFIC EMBODIMENT

Referring now to the drawings, the metal recovery apparatus is shown generally at 10 in Figure 5.

-4-

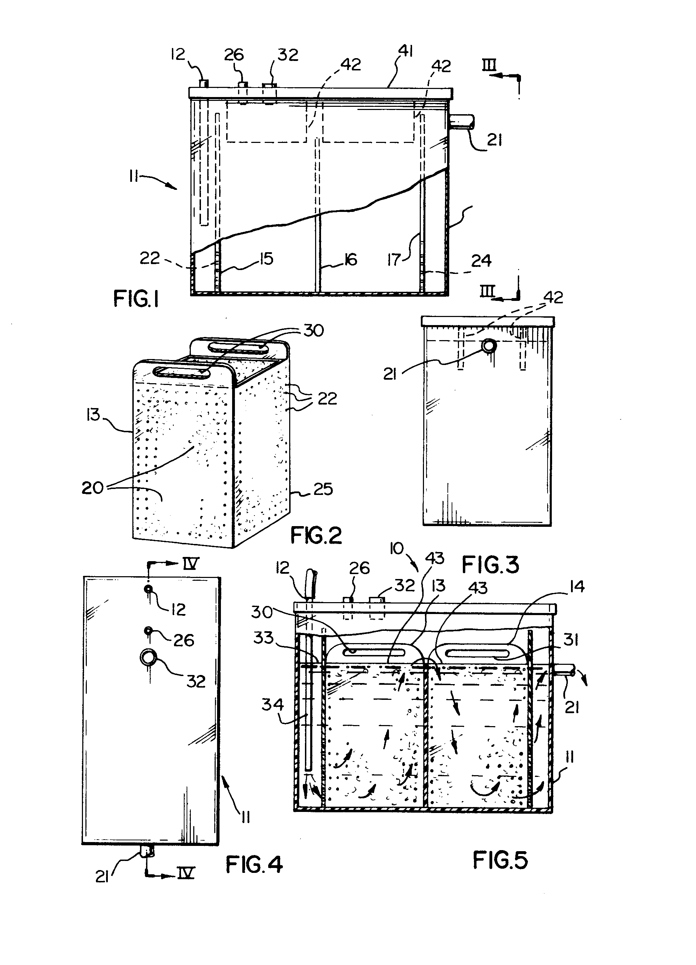

It comprises a container 11 having a solution inlet 12 made from P.V.C. or other appropriate material and partitions 15, 16, 17, extending across the width of the container 11 as seen in Figure 3. Partitions 15, 17 have holes or slots 22, 24, respectively, in the lower portion to allow solution flow therethrough. A pair of recovery cells 13, 14, respectively (Figure 5), are removable from the container 11 and hold a magnesium particulate solution in the form of shavings 20. An outlet 21 is provided for solution outflow. The recovery cells 13, 14 are open to the flow of the solution from the solution inlet 12 as hereinafter described. The top 41 of the container 11 is removable and has four spacers or ribs 42 extending downwardly as seen in Figures 1 and 3, two for each cell 13, 14. These spacers 42 contact grids 43 (Figure 5) mounted on the top of the particulate 20 in each recovery cell to prevent the particulate from being displaced by the fluid flow.

The central partition 16 is solid and is located such that its upper end terminates approximately coincident with the sidewall 25 of cell 13 (Figure 2) and its lower end extends completely to the bottom of container 11.

0220811

-5-

The recovery cells 13, 14 are identical and independently removeable from container 11. They have holes or slots 40 in all of the sidewalls 25 open to the solution flow and have handles 30, 31, respectively, located thereon for ease of handling. A diameter of 1/4" for the holes 40 has been found to be practicable. The cells 13 are preferably constructed of a transparent material such as acrylic plastic, glass, etc. so that the ongoing reaction is readily observable. The container 11 is also preferably transparent and made of the same acrylic plastic material.

An air vent 32 is located in the top of the container 11 to allow air into the container 11 which will prevent the container becoming airtight and the solution from backing up into the solution inlet 25.

A water inlet 26 is also located in the top of container 11 to provide water inflow as desired for reaction control purposes and to "fine tune" control the solution PH.

OPERATION

In operation, it will be assumed that recovery cells 13, 14 have been freshly charged with magnesium particulate in the form of shavings 20 and that they are
in operating position within the container as illustrated
in Figure 5.

The container 11 is then filled with water to
the level shown as 33 in Figure 5 by flowing water through
the water inlet 26. The photographic solution is then
introduced to the container 11 through the solution inlet
12, the PH of the solution being adjusted, if required,
prior to the introduction of the solution to the recovery
cell 10 for maximum efficiency. The solution is supplied
to the inlet 12 from a reservoir (not shown) which
contains the solution and allows it to feed at an
appropriate feed rate to the inlet 12.

A pipe 34 extends downwardly from the inlet 12
and terminates below the water level 33 as illustrated. As
indicated by the arrows, the solution travels downwardly
in pipe 34 until it is released whereupon it will move
through the holes or slots 22 of partition 15 and then
percolates or filters upwardly through the magnesium
particulate in recovery cell 13. The solution then travels
out of cell 13, over the top of central partition 16 and
into recovery cell 14. As indicated by the flow arrows,
the solution then filters downwardly through the magnesium particulate 20 in recovery cell 14 and through the holes
or slots in partition 17. The solution then travels
upwardly as indicated and out of outlet 21. The filtering
phenomenon of the magnesium particulate 20 is noteworthy
and, while not wishing to be restricted thereby, it is
believed that as the magnesium is displaced, there is a
constant breakdown of precious metal precipitate which
fills the interstices in the magnesium particulate. As
this occurs, the solution is constantly being filtered
such that the previous channeling obtained with other
particulates is either reduced substantially or is
eliminated entirely.

While the solution is travelling through the
magnesium particulate 20, the precious metals in the
solution are precipitating and displacing the magnesium.
As the precipitating reaction takes place, hydrogen
chloride gas is being produced which bubbles up through
the solution and water. The air vent 32 acts to control
this gas which can be collected and removed if desired and
subjected to a scrubber system before being released to
the environment. Most of the metal is precipitated out of
the solution by first recovery cell 13. Second recovery
cell 15 acts as a filter to remove any free flowing
material left in the washwater solution and also to remove

-8-

any of the precious metal still left in the solution which has not been precipitated out in recovery cell 13. The solution discharged from the outlet 21 should be basic in nature and substantially clear as the acid in the solution has been substantially neutralized by the magnesium particulate 20.

When the magnesium particulate of the first cell 13 has been used up, the top 41 of the container 11 is removed, the recovery cell 13 is removed by utilizing handles 30, the grid 43 on cell 13 is removed and the metal is then available for subsequent decanting and refining. The recovery cell 14 is then removed and positioned in the previous operating position of cell 13 because the magnesium particulate in recovery cell 14 has not yet been fully utilized. Newly recharged recovery cell 13 is operatively installed in the container 11 where recovery cell 14 was previously positioned. Grid 43 is operatively positioned on the top of the particulate and the container top 41 is reinstalled. Thus, the process is continuous and utilize the maximum amount of magnesium particulate.

Following the decanting operation, the various metals in the precipitate are individually obtained by refining operations as is known.

-9-

The quantity of water introduced to the apparatus 11 may vary depending on the reaction rate desired and the PH of the solution. However, an amount of water approximately equal to two and one-half time the quantity of solution has been found to work quite well.

The metal recovery technique herein described also contemplates solutions other than spent photographic solutions as, for example, certain other precious metal solutions. These solutions may be such that they are basic or low in acidic content in which event treatment to vary the PH level may be necessary before introduction of the solution to the metal recovery apparatus 10. Thus, for example, the technique could apply to a contaminated solution which has been used for metal stripping or metal plating purposes.

The invention contemplates any number of recovery cells being utilized. In small recovery systems, only one cell is necessary but as the precipitation quantity increases, the quantity of cells may also be increased to allow increased recovery.

Of course, the container 11 may be made from an opaque rather than a transparent material. In this event, the precipitating reaction is not readily observable but other techniques may be utilized to determine when the reaction within the recovery cells is substantially completed. Such detection techniques could be electronic or mechanical in nature.

Instead of an air vent 32, the inlet 12 may have an air airtake (not shown) located thereon. Such an air intake will fulfill the same function as airvent 32 and will prevent solution backup in the apparatus 10.

The use of a scrubber system for the gases given off by the process can also be provided. In this event, a second air outlet (not shown) would be located on the top of the metal recovery apparatus. The air would be sucked out through the second air outlet through the scrubber system (not shown) and thereafter released to the atmosphere.

While a specific embodiment of the invention has been disclosed, such an embodiment should be taken as illustrative only and not as limiting the scope of the invention as defined in the accompanying claims.

I CLAIM:

1.      A method of precipitating precious metals from a
        solution containing such precious metals
        comprising the steps of introducing said
        solution into a container, subjecting said
        solution to the action of magnesium until said
        magnesium is substantially displaced by said
        precious metals and removing said precious
        metals from said container.

2.      A method as in claim 1 wherein said magnesium is
        in the form of particulate material.

3.      A method as in claim 2 wherein said solution is
        filtered through said magnesium particulate.

4.      A method as in claim 3 wherein said solution
        moves upwardly through said magnesium
        particulate.

5.      A method as in claim 4 wherein said particulate
        is contained in a first recovery cell removeable
        from said container and said solution flows
        upwardly through said recovery cell.

-2-

6.    A method as in claim 5 and further comprising a
      second recovery cell, said solution flowing
      through said second recovery cell after leaving
      said first recovery cell.

7.    A method as in claim 6 wherein said water is
      adjustably introduced into said container and is
      present during said precipitation process.

8.    A method as in claim 7 and further comprising an
      air inlet in the top of said container.

9.    A method as in claim 8 and further comprising
      moving said solution after the precipitation of
      said precious metals through an outlet from said
      container after said solution leaves said second
      recovery cell.

10.   A precious metal precipitation apparatus
      comprising a container, a precious metal
      solution introduction means in said container,
      first recovery cell means operable to hold
      magnesium particulate and liquid outlet means in
      said container.

11. A metal precipitation apparatus as in claim 10 wherein said first recovery cell means is removeable and said solution introduction means is mounted adjacent said first recovery cell means.

12. A metal precipitation apparatus as in claim 11 and further comprising a water introduction inlet in said container.

13. A metal precipitation apparatus as in claim 12 wherein a first partition is positioned between said solution introduction means and said first recovery cell and a second partition is positioned between said first recovery cell and said solution outlet means.

14. A metal precipitation apparatus as in claim 13 and further comprising a second recovery cell, a central partition between said first and second recovery cells, said central partition having a closed lower portion to prevent solution flow therethrough and said second partition being located between said second recovery cell and said solution outlet means.

0220811

FIG.1

FIG.2

FIG.3

FIG.4

FIG.5

European Patent Office

**EUROPEAN SEARCH REPORT**

Application number

EP 86 30 6614

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 027 769 (EASTMAN KODAK COMPANY) <br> * Claims; figures * | 1-4 | C 22 B 11/04 |
| X | US-A-4 213 600 (R.R. THOMPSON) <br> * Claims; figures; column 4 * | 1-4 | |
| X | US-A-4 096 064 (E.R. DU FRESNE) <br> * Claims; figures; columns 4-6 * | 1-4 | |
| A | | 5-14 | |
| X | US-A-2 507 175 (S.C. POOL) <br> * Claims * | 1-4 | |
| X | GB-A- 922 021 (LAPORTE CHEMICALS LTD.) <br> * Claims; page 2 * | 1-4 | TECHNICAL FIELDS SEARCHED (Int. Cl.4) <br><br> C 22 B |
| X | BE-A- 653 225 (LAPORTE CHEMICALS LTD.) <br> * Claims; page 3 * | 1-4 | |
| A | WO-A-8 400 563 (DEXTEC METALLURGICAL PTY. Ltd.) <br> * Claims; figures * | 1-14 | |
| A | US-A-4 227 681 (M. GOLBEN) | | |

--- -/-

The present search report has been drawn up for all claims

| Place of search | Date of completion of the search | Examiner |
|---|---|---|
| THE HAGUE | 08-12-1986 | JACOBS J.J.E.G. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-3 744 995 (B.R. MacKAY) | | |
| A | BE-A- 898 504 (W.E. TIPTON) | | |

TECHNICAL FIELDS
SEARCHED (Int. Cl.4)

The present search report has been drawn up for all claims

| Place of search | Date of completion of the search | Examiner |
|---|---|---|
| THE HAGUE | 08-12-1986 | JACOBS J.J.E.G. |